# EUROPÄISCHE PATENTSCHRIFT

(11) **EP 2 467 932 B1**
(45) Veröffentlichungstag und Bekanntmachung des Hinweises auf die Patenterteilung: **02.04.2014**
(21) Anmeldenummer: 10739651.7
(22) Anmeldetag: 10.08.2010
(51) Int. Cl.: H02P 8/40, H02P 8/34

(54) **VORRICHTUNG UND VERFAHREN ZUR ANSTEUERUNG UND DIAGNOSE VON SCHRITTMOTOREN**
DEVICE AND METHOD FOR ACTUATING AND DIAGNOSING STEPPER MOTORS
DISPOSITIF ET PROCÉDÉ DE COMMANDE ET DE DIAGNOSTIC DE MOTEURS PAS À PAS

(30) Priorität: 19.08.2009 DE 102009038111
(43) Veröffentlichungstag der Anmeldung: 27.06.2012
(73) Patentinhaber: Conti Temic Microelectronic GmbH, 90411 Nürnberg (DE)
(72) Erfinder: RÖSSLER, Thomas, 85122 Hitzhofen (DE); WOLFRUM, Werner, 21107 Hamburg (DE)
(74) Vertreter: Bonn, Roman Klemens
(86) Internationale Anmeldenummer: PCT/EP2010/061615
(87) Internationale Veröffentlichungsnummer: WO 2011/020744

(56) Entgegenhaltungen:
- DE-A1-102008 007 267
- DE-C1- 19 951 365
- US-A- 4 289 997
- US-A1- 2006 176 008

## Beschreibung

Die vorliegende Erfindung betrifft eine Vorrichtung und ein Verfahren zur und Diagnose von zumindest zwei Schrittmotoren.

Zum synchronen Betätigen von Scheinwerfern, Ventilen oder Lüftungsklappen eines Fahrzeugs mittels mehrerer Schrittmotoren bedarf es Vorrichtungen oder Verfahren, mit deren Hilfe eine Mehrzahl von Schrittmotoren synchron angesteuert werden kann. Darüber hinaus ist es erforderlich, physikalische Kenngrößen der Schrittmotoren regelmäßig zu messen, so dass eine Fehlfunktion rechtzeitig erkannt werden kann.

Elektromagnetische Schrittmotoren sind spezielle Synchronmotoren. Genau wie diese, bestehen auch Schrittmotoren aus einem feststehenden Stator und einem drehenden Rotor/ bewegendem Läufer. Sie besitzen meist ausgeprägte Pole im Stator, deren Wicklungen zyklisch bestromt werden. Dadurch entsteht ein nahezu sprungförmig umlaufendes Magnetfeld, dem der Rotor schrittweise folgt. Die Drehbewegung entsteht also durch gezieltes Ein- und Ausschalten einzelner Wicklungen. So lassen sich auf einfachste Weise Drehsinn und Drehzahl des Motors steuern.

Aus dem Stand der Technik sind verschiedene Verfahren bzw. Vorrichtungen zur Ansteuerung von mehreren Schrittmotoren offenbart.

Die DE 10 2008 007 267 A1 beschreibt eine Vorrichtung zur Ansteuerung von zumindest zwei Motoren, die nicht als Schrittmotoren ausgestaltet sind, wobei die zumindest zwei Motoren jeweils eine Wicklung umfassen, die miteinander in Reihe geschaltet sind.

Die Offenlegungsschrift DE 44 17 369 A1 offenbart eine Vorrichtung zum Betreiben von Schrittmotoren, wobei eine Mehrzahl von Schrittmotoren parallel zu einer gemeinsamen Versorgungsspannung einzeln ein-/ausschaltbar angeschlossen ist und von einem gemeinsamen Steuergerät angesteuert wird. Insbesondere die Figur 3 zeigt eine Anordnung zur Ansteuerung von einer Mehrzahl von Schrittmotoren, wobei es sich bei diesen Schrittmotoren um bipolare Schrittmotoren handelt, und durch das Umschalten des jeder einzelnen Motorwicklung zugeordneten Schalters sowohl die Stromflussrichtung jeder Motorwicklung einzeln geändert als auch die Stromzufuhr zur jeden Motorwicklung einzeln unterbrochen werden kann. Eine Diagnosevorrichtung für die Messung von Kenngrößen des Schrittmotors ist zwar angedeutet aber nicht näher beschrieben.

Die DE 295 04 735 U1 beschreibt eine Vorrichtung mit mehreren, je für sich aus einer Versorgungsspannung speisbaren unipolaren Schrittmotors. Dabei werden die Schrittmotoren parallel zu einer gemeinsamen Versorgungsspannung angeschlossen und von einer gemeinsamen Steuereinheit angesteuert. Eine Diagnosevorrichtung ist nicht vorgesehen.

Die Patentschrift DE 199 51 365 C1 beschreibt eine Anordnung zum Betrieb von mehreren Schrittmotoren, deren Betriebsspannungen jeweils kleiner sind als die gemeinsame Versorgungsspannung. Um eine Mehrzahl von Schrittmotoren mit einer zulässigen Betriebsspannung, welche kleiner als die Versorgungsspannung der Anlage ist, anzutreiben, werden die Motoren in zumindest zwei Gruppen untergeteilt. Die Wicklungen (Phasen, Spulen) aller Schrittmotoren einer Gruppe werden zueinander parallel und mit der gemeinsamen Versorgungsleitung geschaltet. Die beiden Gruppen von Motoren werden in Reihe geschaltet. Jede einzelne Wicklung eines Motors wird mittels eines mit dieser Wicklung in Reihe geschalteten Halbleiterschalters ein-/ausgeschaltet. Eine Diagnosevorrichtung ist nicht vorgesehen.

Im Halbschrittbetrieb kann die Schrittzahl je Umdrehung verdoppelt werden, indem zwischen den Vollschritten jeweils beide Statorspulen vom Strom durchflossen werden. Hieraus resultiert zwar nur das halbe Drehmoment, jedoch eine doppelte Positioniergenauigkeit. Weiterhin ist bei dem genannten Stand der Technik keine ausreichende und technisch einfach realisierbare Diagnosevorrichtung vorgesehen. Der Mikroschrittbetrieb wird durch zielgerichtetes Verändern der Stromamplituden gleichzeitig eingeschalteter Statorwicklungen realisiert. Hierzu werden steuerbare Stromgeneratoren in den einzelnen Strängen eingesetzt. Damit können nahezu beliebige Schrittwinkel unabhängig von der Strangzahl des Ständers erreicht werden.

Daher liegt die Aufgabe der vorliegenden Erfindung darin, eine Vorrichtung sowie ein Verfahren zur Ansteuerung und Diagnose von einer Mehrzahl von Schrittmotoren bereitzustellen, wodurch die Motoren sowohl im Vollschritt- als auch Halb- bis Mikroschrittmodus betrieben werden können und mit geringem technischen Aufwand eine Diagnose von Kenngrößen der Schrittmotoren ermöglicht wird.

Diese Aufgabe ist erfindungsgemäß gelöst durch eine Vorrichtung mit den Merkmalen des Anspruchs 1 und ein Verfahren mit den Merkmalen des Anspruchs 7. Vorteilhafte Ausgestaltungen der Erfindung sind Gegenstand der Unteransprüche.

Die erfindungsgemäße Vorrichtung zur Ansteuerung und Diagnose von zumindest zwei Schrittmotoren umfasst
- zumindest jeweils zwei Wicklungen für die zumindest zwei Schrittmotoren, wobei jeweils die ersten Wicklungen der Schrittmotoren durch eine erste Leitung und die zweiten Wicklungen der Schrittmotoren durch eine zweite Leitung in Reihe geschaltet sind,
- wenigstens eine Diagnoseeinheit, durch welche elektrische Kenngrößen und/oder deren Wertänderungen in der ersten und/oder zweiten Leitung gemessen werden, und
- die wenigstens eine Diagnoseeinheit derart ausgebildet ist, dass die Funktion der Schrittmotoren anhand der gemessenen Kenngrößen und/oder deren Wertänderungen bewertet wird.

Kerngedanke der Erfindung ist, die Wicklungen (Phasen, Spulen) verschiedener Motoren in Reihe zu beschalten. Dabei werden die ersten Wicklungen der Motoren miteinander und die zweiten Wicklungen der Motoren miteinander usw. in Reihe geschaltet. Ferner ist zwischen den Wicklungsreihen wenigstens eine Diagnoseeinheit vorgesehen, um den Betriebszustand der Motoren zu überwachen.

Dadurch ist eine gleichzeitige Überwachung von allen Schrittmotoren mithilfe einer einzigen, zwischen den Wicklungsreihen angeordneten Diagnoseeinheit möglich. So kann z. B. ein Kurzschluss gegen die Masse- oder Betriebsspannung einer Motorwicklung, ein Kurzschluss zwischen den Wicklungen, ein Wicklungsabriss oder eine Überlast bei einem Motor mittels dieser einzigen Diagnoseeinheit erfasst werden, da in einer Reihenschaltung eine Änderung einer elektrischen Größe eines

Durch die Reihenbeschaltung der jeweiligen Wicklungen der Schrittmotoren können diese unabhängig von der Anzahl, Induktivität, bzw. Wicklungswiderstand mit Strom versorgt werden. Damit können die Motoren sowohl im Vollschrittmodus als auch Mikroschrittmodus betrieben werden.

In einer vorteilhaften Ausgestaltung der Erfindung werden die erfassten elektrischen Kenngrößen und/oder Wertänderungen mit vorher gespeicherten Sollwerten verglichen. Dadurch wird vorteilhaft erreicht, dass die gemessenen Kenngrößen bewertet werden können.

In einer weiteren vorteilhaften Ausgestaltung der Erfindung ist eine Steuereinheit vorgesehen, welche mit der Diagnoseeinheit Daten austauscht und in Abhängigkeit von den Daten der Diagnoseeinheit die wenigstens zwei Schrittmotoren ansteuert. Dabei vergleicht die Diagnoseeinheit die gemessenen Kenngrößen der Schrittmotoren mit festgelegten Schwellwerten, und sendet insbesondere bei einer Abweichung der gemessenen Kenngrößen zu den Schwellwerten ein Signal an die Steuereinheit, so dass die Steuereinheit die Stromzufuhr zu den Schrittmotoren unterbricht. Dadurch wird eine Beschädigung der Schrittmotoren verhindert.

Zweckmäßigerweise ist die Diagnoseeinheit derart ausgebildet, dass sie während der Bewegung oder im Stillstand des Schrittmotors eingesetzt werden kann. Im Stillstand werden über einen Tiefpass die getakteten Halte-Ströme der Schrittmotoren von einem Mikrokontroller analog eingelesen und mit Schwellwerten verglichen. Dies führt insgesamt zu einer erhöhten Überwachungssicherheit, da in jedem Zustand eine Diagnose erfolgen kann.

In einer weiteren vorteilhaften Ausgestaltung der Erfindung umfassen die elektrischen Kenngrößen Strom-, Spannungs- und/oder die Phasenverschiebung zwischen den Spulen. Damit werden die entscheidenden elektrischen Kenngrößen eines Schrittmotors erfasst, durch welche eine Zustandsbewertung möglich ist.

In einer weiteren vorteilhaften Ausgestaltung der Erfindung werden wenigstens zwei bewegliche Teile jeweils durch einen der zumindest zwei Schrittmotoren bewegt. Bei diesen beweglichen Teilen handelt es sich beispielsweise um zwei Scheinwerfer, zwei Lüftungsklappen, oder zwei Ventile eines Kraftfahrzeugs. Dadurch, dass die Schrittmotoren sich synchron bewegen ist eine synchrone Bewegung der Scheinwerfer, Lüftungsklappen oder Ventile möglich.

Bei Verwendung von gleichen Schrittmotoren ergibt sich im Gegensatz zur Parallelen Ansteuerung auch der Vorteil des geringeren Strombedarfes somit auch der geringeren Verlustleistung, da der Strom in der Reihenbeschaltung über alle Bauteile einer Masche gleich ist.

Ein weiterer Vorteil ist, dass alle erfindungsgemäß geschalteten Motoren bei einem Fehlerfall z. B. beim Abriss bei einem der Motoren oder bei der Verlust einer gemeinsamen Zuleitungen oder nicht weiter mit Strom versorgt werden, da der Stromkreis geöffnet wird. Dadurch werden die Motoren besser geschützt und die Betriebsdauer der Motoren verlängert.

Weitere Einzelheiten und Vorteile der Erfindung werden in Bezugnahme auf die beigefügten Figuren erläutert.

Darin zeigen schematisch:
- Fig. 1: Schrittmotoren mit einer Diagnosevorrichtung; und
- Fig. 2: ein Kraftfahrzeug.

Bei der nachfolgenden Beschreibung einer bevorzugten Ausführungsform der vorliegenden Erfindung bezeichnen gleiche Bezugszeichen gleiche oder vergleichbare Komponenten.

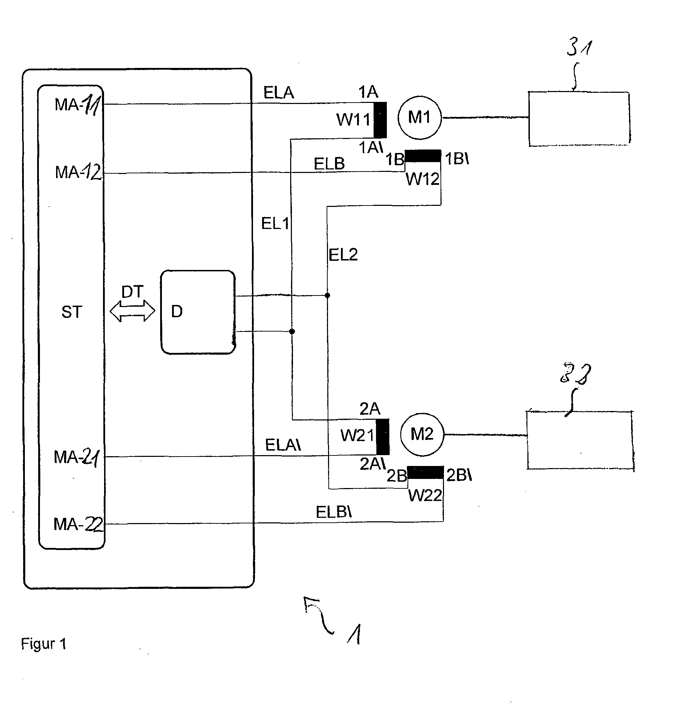

Die Figur 1 zeigt die erfindungsgemäße Vorrichtung 1. Die Vorrichtung 1 umfasst eine Steuereinheit ST, eine Diagnosevorrichtung D und zwei Schrittmotoren M1, M2. Die zwei Schrittmotoren M1 weisen jeweils zwei Wicklungen W11, W12 (M1) und W21, W12 (M2) auf. Mittels der Steuereinheit ST werden die zwei Schrittmotoren M1, M2 synchron angesteuert. Die Steuereinheit ST weist vier Anschlüsse MA-11, MA-21, MA-12, MA-22 auf. Der Anschluss MA-11 ist mit dem Motoranschluss 1A der ersten Wicklung W11 des ersten Motors M1 mittels einer elektrischen Leitung ELA elektrisch verbunden. Der Anschluss MA-21 der Steuereinheit ST ist mit dem Motoranschluss 2A\ der ersten Wicklung W21 des zweiten Schrittmotors M2 mittels einer weiteren elektrischen Leitung ELA\ elektrisch verbunden. Die Wicklungen W11 und W21 der beiden Schrittmotoren M1 und M2 sind mittels einer elektrischen Leitung EL1 in Reihe geschaltet. Dabei verbindet die Leitung EL1 den Motoranschluss 1A\ der Wicklung W11 des ersten Motors M1 mit dem Motoranschluss 2A der Wicklung W21 des zweiten Motors M2.

Dementsprechend ist der Anschluss MA-12 der Steuereinheit ST mit dem Motoranschluss 1B der zweiten Wicklung W12 des ersten Motors M1 mittels einer elektrischen Leitung ELB elektrisch verbunden. Der Anschluss MA-22 der Steuereinheit ST ist mit dem Motoranschluss 2B\ der zweiten Wicklung W22 des zweiten Schrittmotors M2 mittels einer weiteren elektrischen Leitung ELB\ elektrisch verbunden. Die Wicklungen W12 und W22 der beiden Schrittmotoren M1 und M2 sind mittels einer elektrischen Leitung EL2 in Reihe geschaltet. Dabei verbindet die Leitung EL2 den Motoranschluss 1B\ der Wicklung W12 des ersten Motors M1 mit dem Motoranschluss 2B der Wicklung W22 des zweiten Motors M2.

Die Diagnoseeinheit D ist mit den beiden Leitungen EL1 und EL2 verbunden. Zwischen dieser Diagnoseeinheit D und der Steuereinheit ST findet ein Datenaustausch DT statt. Diese Diagnoseeinheit D überwacht beispielsweise die Spannung bzw. die Spannungsschwankung an den beiden Leitungen EL1 und EL2. Im Falle einer Überschreitung bzw. Unterschreitung eines vorbestimmten Schwellwertes, beispielsweise durch einen Kurzschluss gegen die elektrische Masse oder Versorgungsspannung, sendet diese Diagnoseeinheit D dann ein Signal an die Steuereinheit ST. Die Steuereinheit ST unterbricht daraufhin z. B. die Stromzufuhr zu den Schrittmotoren M1 und M2.

Schrittmotoren mit sechs bzw. acht Anschlüssen können analog in Reihe geschaltet angesteuert und diagnostiziert werden. Dabei können weitere Diagnoseeinheiten für weitere Wicklungsreihen angeordnet werden.

Die erfindungsgemäße Vorrichtung bzw. dieses erfindungsgemäße Verfahren kann beispielsweise zum Betätigen von mechanisch beweglichen Teilen wie zwei Scheinwerfern zur Leuchtweitenregulierung, Ventilen oder Lüftungsklappen eines Fahrzeugs 41 eingesetzt werden. Zwei gleiche Scheinwerfer werden dabei durch zwei seriell geschaltete Schrittmotoren angesteuert.

Im Fahrzeug 41 wird je ein Schrittmotor M1, M2 für einen Scheinwerfer über einen Hebel mit der Mechanik der Scheinwerfer verbunden. Dadurch werden beide Scheinwerfer des Fahrzeuges gleichzeitig bewegt. Eine ungleiche Bewegung der Motoren M1, M2 würde zu einer ungleichen Bewegung der Scheinwerfer und damit zu einem unterschiedlichen Leuchtwinkel der Scheinwerfer führen.

Vorteilhaft kann die Erfindung bei der Bewegung oder im Stillstand der Motoren M1, M2 betrieben werden. Im Stillstand werden über einen Tiefpass die getakteten Halteströme der Schrittmotoren M1, M2 von einem Mikrokontroller analog eingelesen und mit Schwellwerten verglichen. Der Haltestrom ist bei einem Schrittmotor der Strom, der den jeweiligen Stator in der aktuellen Stellung hält. Dadurch, dass der Haltestrom deutlich geringer ist, ca. 50mA, wie der Betriebsstrom, ca. 500mA, besteht hier ein größeres Puls-Pausenverhältnis, also eine niedrigere Frequenz, bei gleicher über die Zeit integrierte Energie. Durch einen Tiefpass werden entsprechend nur Signale mit den niedrigeren Frequenzen gemessen, welche im Stillstand vorhanden sind. Diese unterschiedliche Messung bei bewegtem Motor M1, M2 bzw. stehendem Motor M1, M2 wird auch als asynchrone Abtastung beschrieben.

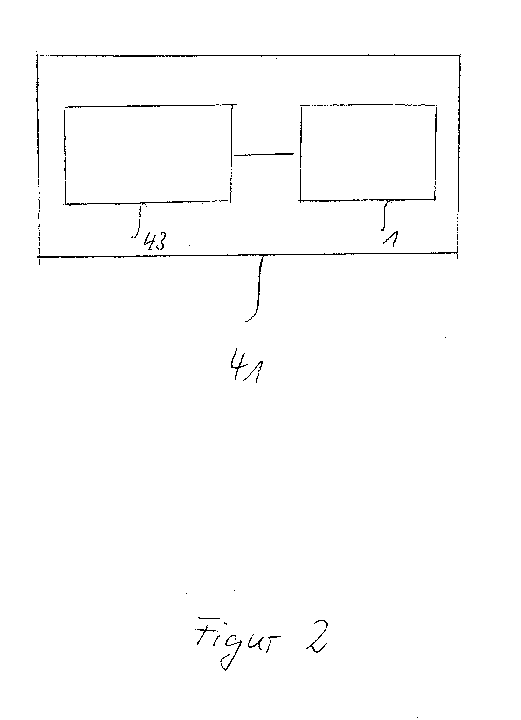

Figur 2 zeigt ein Kraftfahrzeug 41, das die Vorrichtung 1 und eine Anzeigevorrichtung 43 umfasst.

Zwischen der Diagnoseeinheit D und der Steuereinheit ST findet ein Datenaustausch DT statt. Diese Diagnoseeinheit D überwacht beispielsweise die Spannung bzw. die Spannungsschwankung an den beiden Leitungen EL1 und EL2. Im Falle einer Überschreitung bzw. Unterschreitung eines vorbestimmten Schwellwertes, beispielsweise durch einen Kurzschluss gegen die elektrische Masse oder Versorgungsspannung, sendet diese Diagnoseeinheit D dann ein Signal an die Steuereinheit ST. Die Steuereinheit ST unterbricht daraufhin z. B. die Stromzufuhr zu den Schrittmotoren M1 und M2 und sendet ein Signal an die Anzeigevorrichtung 43, wo diese Abweichung angezeigt wird.

Die Anzeigevorrichtung 42 kann direkt bei den Armaturen des Kraftfahrzeugs 41 angeordnet sein, so dass eine Abweichung des Schwellenwerts dem Fahrer des Kraftfahrzeugs 41 unmittelbar angezeigt wird. Die Anzeigevorrichtung 42 kann aber auch derart ausgestaltet sein, dass die übermittelten Signale erst in einer Werkstatt angezeigt werden.

## Patentansprüche

1. Vorrichtung (1) zur Ansteuerung und Diagnose von zumindest zwei Schrittmotoren (M1, M2, ...), wobei
- die zumindest zwei Schrittmotoren (M1, M2) jeweils zumindest zwei Wicklungen (W11 und W12 bzw. W21 und W22) umfassen, wobei jeweils die ersten Wicklungen (W11 und W21) der Schrittmotoren (M1, M2) durch eine erste Leitung (EL1) und die zweiten Wicklungen (W12 und W22) der Schrittmotoren (M1, M2) durch eine zweite Leitung (EL2) in Reihe geschaltet sind,
- wenigstens eine Diagnoseeinheit (D) vorgesehen ist, durch welche elektrische Kenngrößen und/oder deren Wertänderungen in der ersten und/oder zweiten Leitung (EL1, EL2) gemessen werden, und
- die wenigstens eine Diagnoseeinheit (D) derart ausgebildet ist, dass die Funktion der Schrittmotoren anhand der gemessenen Kenngrößen und/oder deren Wertänderungen bewertet wird.

2. Vorrichtung (1) nach Anspruch 1, **dadurch gekennzeichnet, dass** die erfassten elektrischen Kenngrößen und/oder Wertänderungen mit vorher gespeicherten Sollwerten verglichen werden.

3. Vorrichtung (1) nach Anspruch 1 oder 2, **gekennzeichnet durch** eine Steuereinheit (ST), welche mit der Diagnoseeinheit (D) Daten austauscht und in Abhängigkeit von den Daten der Diagnoseeinheit (D) die wenigstens zwei Schrittmotoren (M1, M2) ansteuert.

4. Vorrichtung (1) nach Anspruch 1 bis 3, **dadurch gekennzeichnet, dass** die Diagnoseeinheit derart ausgebildet ist, dass sie während der Bewegung oder im Stillstand des Schrittmotors eingesetzt werden kann.

5. Vorrichtung (1) nach einem der vorherigen Ansprüche, **dadurch gekennzeichnet, dass** die elektrischen Kenngrößen und/oder Werteänderungen kontinuierlich gemessen werden.

6. Vorrichtung (1) nach einem der vorherigen Ansprüche, **dadurch gekennzeichnet, dass** die elektrischen Kenngrößen Strom-, Spannungs- und/oder die Phasenverschiebung zwischen den Spulen umfasst.

7. Vorrichtung (1) nach einem der Ansprüche, **gekennzeichnet durch** wenigstens zwei mechanisch bewegbare Teile (31, 32), welche **durch** jeweils einen der zumindest zwei Schrittmotoren (M1, M2) bewegt werden.

8. Vorrichtung (1) nach Anspruch 7, **dadurch gekennzeichnet, dass** die zwei mechanisch bewegbaren Teile (31, 32) zwei Scheinwerfer, zwei Ventilklappen oder zwei Lüftungsklappen umfassen.

9. Kraftfahrzeug (41) umfassend die Vorrichtung (1) nach einem der vorherigen Ansprüche und eine Anzeigevorrichtung (43).

10. Verfahren zur Ansteuerung und Diagnose von zumindest zwei Schrittmotoren (M1, M2, ...), welche jeweils zumindest zwei Wicklungen (W11 und W12 bzw. W21 und W22) umfassen, und die jeweils ersten Wicklungen (W11 und W21) der Schrittmotoren (M1, M2) durch eine erste Leitung (EL1) und die zweiten Wicklungen (W12 und W22) der Schrittmotoren (M1, M2) durch eine zweite Leitung (EL2) in Reihe geschaltet sind, wobei
- wenigstens eine Diagnoseeinheit (D) elektrische Kenngrößen und/oder deren Wertänderungen in der ersten und/oder zweiten Leitung (EL1, EL2) misst und
- die Diagnoseeinheit (D) die Funktion der Schrittmotoren anhand der gemessenen Kenngrößen und/oder deren Wertänderungen bewertet.

11. Verfahren nach Anspruch 10, **dadurch gekennzeichnet, dass** die Diagnoseeinheit (D) die elektrischen Kenngrößen und/oder deren Wertänderungen mit vorher gespeicherten Sollwerten vergleicht.

12. Verfahren nach Anspruch 10 oder 11, **dadurch gekennzeichnet, dass** die Diagnoseeinheit (D) Daten mit einer Steuereinheit (ST) austauscht, und in Abhängigkeit von den Daten der Diagnoseeinheit (D) die wenigstens zwei Schrittmotoren (M1, M2) ansteuert.

13. Verfahren nach Anspruch 10 bis 12, **dadurch gekennzeichnet, dass** die zumindest zwei Schrittmotoren (M1, M2) wenigstens zwei mechanische Teile (31, 32) bewegen.

14. Verfahren nach Anspruch 10 bis 12, **dadurch gekennzeichnet, dass** die zumindest zwei Schrittmotoren (M1, M2) wenigstens zwei Scheinwerfer, zwei Ventilklappen oder zwei Lüftungsklappen bewegen.

## Claims

1. Device (1) for actuating and diagnosing at least two stepper motors (M1, M2, ...), wherein
• the at least two stepper motors (M1, M2) each comprise at least two windings (W11 and W12 and, respectively, W21 and W22), wherein in each case the first windings (W11 and W21) of the stepper motors (M1, M2) are connected in series by a first line (EL1) and the second windings (W12 and W22) of the stepper motors (M1, M2) are connected in series by a second line (EL2),
• at least one diagnosis unit (D) is provided, electrical characteristic variables and/or changes in the value of said electrical characteristic variables in the first and/or second line (EL1, EL2) being measured by said diagnosis unit, and
• the at least one diagnosis unit (D) is formed in such a way that the functioning of the stepper motors is evaluated on the basis of the measured characteristic variables and/or the changes in the value of said measured characteristic variables.

2. Device (1) according to Claim 1, **characterized in that** the detected electrical characteristic variables and/or changes in value are compared with previously stored setpoint values.

3. Device (1) according to Claim 1 or 2, **characterized by** a control unit (ST) which interchanges data with the diagnosis unit (D) and actuates the at least two stepper motors (M1, M2) as a function of the data in the diagnosis unit (D).

4. Device (1) according to Claims 1 to 3, **characterized in that** the diagnosis unit is formed in such a way that it can be used when the stepper motor is moving or when it is stationary.

5. Device (1) according to one of the preceding claims, **characterized in that** the electrical characteristic variables and/or changes in value are continuously measured.

6. Device (1) according to one of the preceding claims, **characterized in that** the electrical characteristic variables comprise the current, voltage and/or phase shift between the coils.

7. Device (1) according to one of the claims, **characterized by** at least two mechanically moveable parts (31, 32) which are moved by in each case one of the at least two stepper motors (M1, M2).

8. Device (1) according to Claim 7, **characterized in that** the two mechanically moveable parts (31, 32) comprise two headlights, two valve flaps or two ventilation flaps.

9. Motor vehicle (41) comprising the device (1) according to one of the preceding claims and an indicator device (43).

10. Method for actuating and diagnosing at least two stepper motors (M1, M2, ...) which each comprise at least two windings (W11 and W12 and, respectively, W21 and W22), and the respectively first windings (W11 and W21) of the stepper motors (M1, M2) are connected in series by a first line (EL1) and the second windings (W12 and W22) of the stepper motors (M1, M2) are connected in series by a second line (EL2), wherein
• at least one diagnosis unit (D) measures electrical characteristic variables and/or changes in the value of said electrical characteristic variables in the first and/or second line (EL1, EL2), and
• the diagnosis unit (D) evaluates the functioning of the stepper motors on the basis of the measured characteristic variables and/or the changes in the value of said measured characteristic variables.

11. Method according to Claim 10, **characterized in that** the diagnosis unit (D) compares the electrical characteristic variables and/or the changes in the value of said electrical characteristics variables with previously stored setpoint values.

12. Method according to Claim 10 or 11, **characterized in that** the diagnosis unit (D) interchanges data with a control unit (ST) which actuates the at least two stepper motors (M1, M2) as a function of the data in the diagnosis unit (D).

13. Method according to Claims 10 to 12, **characterized in that** the at least two stepper motors (M1, M2) move at least two mechanical parts (31, 32).

14. Method according to Claims 10 to 12, **characterized in that** the at least two stepper motors (M1, M2) move at least two headlights, two valve flaps or two ventilation flaps.

## Revendications

1. Dispositif (1) pour commander et diagnostiquer au moins deux moteurs pas-à-pas (M1, M2, ...), dans lequel
- les au moins deux moteurs pas-à-pas (M1, M2) comprennent chacun au moins deux enroulements (respectivement W11 et W12, et W21 et W22), les premiers enroulements (W11 et W21) de chacun des moteurs pas-à-pas (M1, M2) étant montés en série par une première ligne (EL1), et les deuxièmes enroulements (W12 et W22) de chacun des moteurs pas-à-pas (M1, M2) étant montés en série par une deuxième ligne (EL2),
- au moins une unité de diagnostic (D) est prévue, par laquelle des paramètres électriques et/ou leurs variations sont mesurés dans la première et/ou dans la deuxième ligne (EL1, EL2), et
- la ou les unités de diagnostic (D) sont configurées de telle sorte que la fonction des moteurs pas-à-pas soit évaluée à l'aide des paramètres mesurés et/ou de leurs variations.

2. Dispositif (1) selon la revendication 1, **caractérisé en ce que** les paramètres électriques enregistrés et/ou leurs variations sont comparés à des valeurs de consigne mémorisées au préalable.

3. Dispositif (1) selon la revendication 1 ou 2, **caractérisé par** une unité de commande (ST), qui échange des données avec l'unité de diagnostic (D), et qui en fonction des données de l'unité de diagnostic (D) commande les au moins deux moteurs pas-à-pas (M1, M2).

4. Dispositif (1) selon les revendications 1 à 3, **caractérisé en ce que** l'unité de diagnostic est configurée de telle sorte qu'elle puisse être utilisée pendant le mouvement ou l'arrêt du moteur pas-à-pas.

5. Dispositif (1) selon l'une des revendications précédentes, **caractérisé en ce que** les paramètres électriques et/ou leurs variations sont mesurés en continu.

6. Dispositif (1) selon l'une des revendications précédentes, **caractérisé en ce que** les paramètres électriques englobent le déplacement d'intensité, le déplacement de tension et/ou le déphasage entre les bobines.

7. Dispositif (1) selon l'une des revendications, **caractérisé par** au moins deux pièces mécaniquement mobiles (31, 32), qui sont mises en mouvement chacune par un des au moins deux moteurs pas-à-pas (M1, M2).

8. Dispositif (1) selon la revendication 7, **caractérisé en ce que** les deux pièces mécaniquement mobiles (31, 32) comprennent deux projecteurs, deux clapets de soupape ou deux clapets d'aération.

9. Véhicule à moteur (41) comprenant le dispositif (1) selon l'une des revendications précédentes et un dispositif d'affichage (43).

10. Procédé pour commander et diagnostiquer au moins deux moteurs pas-à-pas (M1, M2, ...), qui comprennent chacun au moins deux enroulements (respectivement W11 et W12, et W21 et W22), et les premiers enroulements (W11 et W21) des moteurs pas-à-pas (M1, M2) étant montés en série par une première ligne (EL1), et les deuxièmes enroulements (W12 et W22) des moteurs pas-à-pas (M1, M2) étant montés en série par une deuxième ligne (EL2),
dans lequel
- au moins une unité de diagnostic (D) mesure des paramètres électriques et/ou leurs variations dans la première et/ou dans la deuxième ligne (LE1, LE2), et
- l'unité de diagnostic (D) évalue la fonction des moteurs pas-à-pas à l'aide des paramètres mesurés et/ou de leurs variations.

11. Procédé selon la revendication 10, **caractérisé en ce que** l'unité de diagnostic (D) compare les paramètres électriques et/ou leurs variations à des valeurs de consigne préalablement mémorisées.

12. Procédé selon la revendication 10 ou 11, **caractérisé en ce que** l'unité de diagnostic (D) échange des données avec une unité de commande (ST) et, en fonction des données de l'unité de diagnostic (D), commande les au moins deux moteurs pas-à-pas (M1, M2).

13. Procédé selon les revendications 10 à 12, **caractérisé en ce que** les au moins deux moteurs pas-à-pas (M1, M2) mettent en mouvement au moins deux pièces mécaniques (31, 32).

14. Procédé selon les revendications 10 à 12, **caractérisé en ce que** les au moins deux moteurs pas-à-pas (M1, M2) mettent en mouvement au moins deux projecteurs, deux clapets de soupape ou deux clapets d'aération.
